# EUROPÄISCHE PATENTSCHRIFT

(11) **EP 2 512 925 B1**
(45) Veröffentlichungstag und Bekanntmachung des Hinweises auf die Patenterteilung: **07.02.2018**
(21) Anmeldenummer: 10796341.5
(22) Anmeldetag: 14.12.2010
(51) Int. Cl.: B64D 13/00, F16L 9/21, B64D 13/06

(54) **AKUSTISCH OPTIMIERTE KLIMAANLAGENKOMPONENTEN**
ACOUSTICALLY OPTIMIZED AIR CONDITIONING COMPONENTS
COMPOSANTS D'INSTALLATION DE CLIMATISATION OPTIMISÉS AU PLAN ACOUSTIQUE

(30) Priorität: 14.12.2009 US 286300 P; 14.12.2009 DE 102009058227
(43) Veröffentlichungstag der Anmeldung: 24.10.2012
(73) Patentinhaber: Airbus Operations GmbH, 21129 Hamburg (DE)
(72) Erfinder: THOMAS, Christian, 22769 Hamburg (DE)
(74) Vertreter: LKGLOBAL Lorenz & Kopf PartG mbB Patentanwälte
(86) Internationale Anmeldenummer: PCT/EP2010/069570
(87) Internationale Veröffentlichungsnummer: WO 2011/082983

(56) Entgegenhaltungen:
- WO-A1-03/081119
- DE-A1-102006 050 869
- DE-U1- 20 105 081
- US-A1- 2009 298 408
- US-B1- 6 202 702

## Beschreibung

Die vorliegende Erfindung befasst sich mit der Schalldämpfung von Klimaanlagen in einem Luftfahrzeug. Die Erfindung betrifft insbesondere eine Klimaanlagenluftführung für ein Luftfahrzeug sowie auch ein Flugzeug mit Klimaanlageluftführungen (siehe z.B. WO 03/081119 A1, dem Oberbegriff des unabhängigen Anspruchs 1 entsprechend). Die Klimaanlage eines modernen Verkehrsflugzeuges ist neben den Triebwerken und der äußeren Luftumströmung des Rumpfes eine der wesentlichen Lärmquellen des Flugzeuges, bezogen auf den Lärmeintrag in die Innenräume des Flugzeugs, das heißt beispielsweise Cockpit und Kabinenbereich. Der Lärm wird dabei im Wesentlichen von den Gebläsen der Klimaanlage erzeugt und innerhalb des Rohrsystems zur Luftführung weitergeleitet. Anschließend wird der Lärm über die Luftauslässe in die Kabine abgestrahlt. Zur Reduktion dieses Lärmanteils können in den Geräuschpfad, beispielsweise das Rohrsystem der Klimaanlage, Schalldämpfer integriert werden. Beispielsweise wird auf der Außenseite einer Rohrführung ein akustischer Absorber, z. B. aus Glaswolle, aufgebracht, wozu jedoch die Wandung zwischen Absorber und der strömenden Luft perforiert oder gitterförmig ausgebildet werden muss. Zusätzlich wird an der Außenseite des Absorbers eine luftdichte Schicht vorgesehen. Um eine Abrasion des meist sehr leichten und beschädigungsanfälligen Absorbers zu verhindern, kann zwischen der perforierten Wandung und dem Absorbermaterial noch ein Gewebe eingefügt werden, das verhindert, dass durch den Luftstrom kleine Teilchen aus dem Absorbermaterial gerissen und von der Luft mitgenommen werden. In der DE 10 2006 050 869 ist eine Schalldämpfungseinrichtung für eine Luftrohrleitung beschrieben, bei der innerhalb eines gebogenen Rohrabschnitts ein Akustikelement angeordnet ist. Es hat sich jedoch gezeigt, dass derartige Maßnahmen einen großen Bauraum beanspruchen und zudem ein zusätzliches Gewicht bedeuten, wenn eine entsprechend hohe Schalldämpfung erreicht werden soll, die wiederum aus den zunehmend höheren Anforderungen an die Aufenthaltsqualität in Kabinenräumen von Flugzeugen gestellt werden.

Es besteht daher ein Bedarf, eine bezogen auf Bauraumbedarf und Gewicht optimierte Klimaanlagenluftführung für den Einsatz in einem Luftfahrzeug zur Verfügung zu stellen, wobei gleichzeitig möglichst gute schalldämpfende Eigenschaften erreicht werden sollen.

Erfingdungsgemäß werden dafür eine Klimaanlagenluftführung mit schalldämpfender Wirkung für ein Luftfahrzeug sowie ein Flugzeug mit einer Klimaanlage, die erfindungsgemäße Klimaanlagenluftführungen mit schalldämpfender Wirkung aufweist, nach dem unabhängigen Anspruch 1 bzw. dem Anspruch 10 vorgesehen.

Weiterbildungen der Klimaanlageluftführung sind in den abhängigen Ansprüchen 2 bis 9 angegeben.

Gemäß einer beispielhaften Ausführungsform der Erfindung ist eine Klimaanlagenluftführung mit schalldämpfender Wirkung für ein Luftfahrzeug vorgesehen, die eine schalldämpfende Wandung aufweist, welche einen durchgehenden Hohlraum zur Führung der Luft wenigstens teilweise umgibt, wobei der durchgehende Hohlraum mit einer Lufteintrittsöffnung und einer Luftaustrittsöffnung versehen ist, und wobei der Hohlraum zur Luftführung unmittelbar an die Wandung angrenzt. Die Wandung weist einen mehrlagigen Aufbau mit einer Kernlage und wenigstens einer ersten Decklage auf. Die Kernlage besteht aus einem schallabsorbierenden offenporigen Kernmaterial, so dass die Wandung eine Akustikwirkung aufweist. Die erste Decklage ist luftdicht ausgebildet und auf der außen liegenden Seite der Kernlage angeordnet sowie flächig mit der Kernlage verbunden. Die flächige Verbindung zwischen der Kernlage und der ersten Decklage bewirkt eine Verbundwirkung derart, dass die Wandung selbsttragend ist und eine Strukturfunktion aufweist, um mechanisch auftretende Lasten an tragende Teile des Luftfahrzeugs übertragen zu können, so dass die Wandung neben der Akustikwirkung auch eine Tragewirkung aufweist.

Es sei darauf hingewiesen, dass sich im Rahmen der vorliegenden Erfindung der Begriff Luftführung sowohl auf eine Luftzufuhr an den Kabinenraum als auch auf eine Luftabfuhr, das heißt vom Kabinenraum weg, bezieht.

Das teilweise Umschließen der Luftführung bietet sich beispielsweise dann an, wenn von der Luftführung in relativ kurzen Abständen mehrere Abzweigungen abgehen, so dass die schalldämpfende Wandung mehrfach durchbrochen werden müsste. Außerdem eignet sich das teilweise Umschließen beispielsweise auch für Luftführungen, die in einem besonders engen Bauraum untergebracht werden müssen, z.B. zwischen der Außenwand einer Rumpfkonstruktion mit einer darauf angebrachten Wärmedämmung sowie einem Kabinenpaneel in engem Abstand, so dass nur ein kleiner Hohlraum in der Wandkonstruktion zum Unterbringen der Luftführungen zur Verfügung steht. Dann können beispielsweise die beiden zu den jeweiligen angrenzenden Grenzflächen zeigenden Wandungsbereiche dünn, das heißt ohne schalldämpfende Wirkung, ausgebildet werden, und die schalldämpfende Wirkung wird dort ausgebildet, wo ausreichend Platz zur Verfügung steht, z.B. auf der Ober- oder Unterseite der Luftführung.

Die nur teilweise Umschließung durch die Wandung bietet außerdem auch als Vorteil, dass eine Luftführung entlang einer thermisch wirksamen Fläche, zum Beispiel einer Außenwand, mit der Wandung direkt an dieser thermisch wirksamen Fläche anliegen kann, so dass die Luft beispielsweise an der Außenwand zusätzlich abgekühlt werden kann, während sie durch das Luftführungssystem transportiert wird.

Da die erste Decklage und die Kernlage aufgrund der Verbundwirkung selbsttragend sind, kann die Wandung statische Funktionen übernehmen, wobei die Kernlage gleichzeitig auch die akustischen Aufgaben übernimmt. Dadurch können die Wandungen leichter und dünner ausgeführt werden.

Unter selbsttragend wird verstanden, dass die Wandung in dem Bereich, wo sie den Hohlraum wenigstens teilweise umgibt, die Umschließungsfläche und auch die konstruktive Wandung bildet. Eine zusätzliche Wandung, z.B. eine Rohrwandung zum Abschluss des Hohlraums, oder eine Rohrwandung, die eine schalldämpfende (Zusatz-) Schicht trägt, ist explizit nicht vorgesehen.

Die erfindungsgemäße Wandung trägt beispielsweise auf zweierlei Weise zur Schallreduktion bei. Zum einen wird der Schalldurchgang des Schalls reduziert, der innerhalb des Hohlraums vorliegt. Dabei kann es sich beispielsweise um Schallwellen handeln, die durch die den Hohlraum durchströmende Luft erzeugt worden sind. Es kann sich dabei auch um Schallwellen handeln, die auf diejenigen Komponenten zurückzuführen sind, welche die Luft aufbereiten und/oder für den Lufttransport sorgen, beispielsweise Ventilatoren. Die erfindungsgemäße Wandung dämpft den Durchgang des Schalls nach außen; zum Beispiel insbesondere dort, wo Klimaanlagenluftführungen im Kabineninnenraum, oder zumindest an den Kabineninnenraum angrenzend verlaufen.

Daneben reduziert die erfindungsgemäße Wandung auch den Schall innerhalb der Luftführung, d.h. innerhalb des Hohlraums, da die Kernlage absorbierend ist und somit den Schallpegel innerhalb der Luftführung, z.B. innerhalb eines Luftführungskanals senkt. Dies führt natürlich auch zu einer reduzierten Schallabgabe durch die Wandung hindurch nach außen. Dies führt aber vor allem auch dazu, dass an denjenigen Stellen, an denen die Luft aus der Klimaanlagenluftführung austritt, z.B. in den Kabineninnenraum, auch eine geringere Schallbelastung mit austritt, zusammen mit der Luft. Die Schallabsorption betrifft beispielsweise die Geräusche, die durch den Lufttransport selbst erzeugt werden und auch die Geräusche, die durch die Ventilatoren o.ä. selbst erzeugt werden und sich durch die Luftführungen ausbreiten.

Insbesondere die Absorptionswirkung wird dadurch erreicht, dass zumindest ein Teil der Umschließungsflächen der Luftführung als Klimaanlagenluftführung mit schalldämpfender Wandung ausgebildet ist.

Gemäß einer beispielhaften Ausführungsform der Erfindung ist die gesamte Umschließungsfläche mit einer schalldämpfenden Wandung ausgebildet.

Gemäß einer beispielhaften Ausführungsform der Erfindung ist die Kernlage den Hohlraum gegenüber der Umgebung thermisch isolierend ausgebildet.

Die thermische Isolierung ermöglicht, dass sich die Temperatur der in den Kabinen oder Cockpitraum einzubringenden Luft innerhalb der Luftführung, beispielsweise innerhalb eines Rohrsystems, nicht oder nur unwesentlich ändert. Dies ist insbesondere dann von Bedeutung, wenn die Luftführung im Bereich von Außenwandflächen der Rumpfkonstruktion angeordnet ist, da in diesen Bereichen zu starken Temperaturschwankungen kommt.

Gemäß einer beispielhaften Ausführungsform der Erfindung ist die Kernlage statisch wirksam.

Das offenporige Kernmaterial bietet den Vorteil, dass es einerseits als poröser Absorber wirksam ist und andererseits aufgrund der flächigen Anbindung des Kernmaterials an die erste Deckschicht eine mehrlagige Struktur mit hohen spezifischen mechanischen und statischen Eigenschaften bereitstellt.

Die luftdichte Ausbildung der ersten Decklage verhindert, dass die aufbereitete Luft durch die Wandung hindurch aus der Luftführung austreten kann.

Gemäß einer beispielhaften Ausführungsform der Erfindung besteht die Kernlage aus einem druckfesten Material.

Gemäß einer beispielhaften Ausführungsform der Erfindung besteht die Kernlage aus einem offenporigen Schaumwerkstoff.

Gemäß einer beispielhaften Ausführungsform der Erfindung ist der offenporige Schaumwerkstoff ein Hartschaumstoff.

Die Verwendung eines Schaums als Kernwerkstoff hat den Vorteil, dass bereits bei der Herstellung der Wandung, beispielsweise als Halbzeug, die später zum Einsatz kommende Dicke der Kernlage berücksichtigt werden kann. Gleichzeitig bietet ein offenporiger Schaumwerkstoff auch gute Wärmedämmeigenschaften.

Gemäß einer beispielhaften Ausführungsform der Erfindung weist der Schaumwerkstoff eine geringe Dichte auf. Beispielsweise weist der Schaumwerkstoff eine Dichte von max. 300 kg/m³ auf, z.B. eine Dichte von max. 150 kg/m³.

Gemäß einer beispielhaften Ausführungsform weist der Schaumwerkstoff eine Dichte von 30 kg/m³ bis 110 kg/m³ auf.

Gemäß einer beispielhaften Ausführungsform der Erfindung weist der Schaumwerkstoff eine Druckfestigkeit von ca. 200 kPa bis ca. 1500 kPa bei einer Dichte zwischen ca. 30 kg/m³ und ca. 120 kg/m³ auf.

Gemäß einer beispielhaften Ausführungsform der Erfindung weist der Schaumwerkstoff eine Biegesteifigkeit von 200 kPa bis ca. 2200 kPa bei einer Dichte zwischen ca. 30 kg/m³ und ca. 120 kg/m³ auf.

Gemäß einer beispielhaften Ausführungsform der Erfindung weist der Schaumwerkstoff eine Schub-/bzw. Scherfestigkeit von 400 kPa bis ca. 1500 kPa bei einer Dichte zwischen ca. 30 kg/m³ und ca. 120 kg/m³ auf.

Gemäß einer beispielhaften Ausführungsform der Erfindung weist der Schaumwerkstoff eine Zugfestigkeit von 500 kPa bis ca. 3000 kPa bei einer Dichte zwischen ca. 30 kg/m³ und ca. 120 kg/m³ auf.

Beispielsweise besteht die Kernlage aus einem Hochleistungsthermoplast, z.B. einem amorphen Polyetherimid-Kunststoff.

Gemäß einer beispielhaften Ausführungsform der Erfindung ist die erste Decklage schalldämmend ausgebildet.

Dadurch wird verhindert, dass Schall, der beispielsweise nicht vollständig durch den Absorber absorbiert wird, aus der Luftführung nach außen austritt. Dadurch ist es möglich, Klimaanlagenluftführungen direkt hinter Kabinenraum abschließenden Flächen anzuordnen, die über keine oder nur sehr geringe schalldämmende Eigenschaften verfügen.

Die schalldämmende Ausbildung der ersten Decklage ermöglicht ein Anordnen von Klimaanlagenluftführungen in unmittelbarer Nähe externer, das heißt nicht mit der Klimaanlagenluftführung direkt in Verbindung stehender Lärmquellen, ohne dass es zu einem Schalleintrag von diesen Lärmquellen in den Luftführungsbereich kommt, von wo aus der Schall über die Luftführung an den Kabinenraum abgegeben werden könnte.

Die integrale Ausbildung von der ersten Decklage und der Kernlage bietet sowohl bei der Verarbeitung und Montage als auch bei der Herstellung wirtschaftliche und ökologische Vorteile, da der erforderliche Material- und Handhabungsaufwand auf ein Minimum reduziert wird.

Gemäß einer beispielhaften Ausführungsform der Erfindung ist die erste Decklage integral mit der Kernlage ausgebildet.

Gemäß einer beispielhaften Ausführungsform der Erfindung ist die erste Decklage mit einer dünnen Folie luftdicht nach Außen abgeschlossen.

Gemäß einer anderen beispielhaften Ausführungsform der Erfindung ist die erste Decklage mit einem Lack oder einer Beschichtung luftdicht nach Außen abgeschlossen.

Gemäß einer beispielhaften Ausführungsform der Erfindung ist die erste Decklage einstückig mit der Kernlage ausgebildet.

Gemäß einer beispielhaften Ausführungsform der Erfindung ist die erste Decklage durch Schließen der äußeren Poren des offenporigen Kernmaterials erzeugt worden.

Gemäß einer beispielhaften Ausführungsform der Erfindung ist die erste Decklage durch Verdichten der äußeren Schicht des Kernmaterials erzeugt worden.

Das Verdichten der äußeren Schicht des Kernmaterials bietet außerdem die Möglichkeit, zunächst die Dicke der Kernlage beispielsweise durch Abtragen von Material an den jeweiligen Einsatzzweck anzupassen und erst dann die erste Decklage durch Verdichten zu erzeugen.

Gemäß einer beispielhaften Ausführungsform der Erfindung ist die erste Decklage durch Verschmelzen des äußeren Bereichs des Kernmaterials hergestellt.

Gemäß einer beispielhaften Ausführungsform der Erfindung ist eine zweite Decklage vorgesehen, die auf der innen liegenden Seite der Kernlage angeordnet ist, wobei die zweite Decklage akustisch transparent ausgebildet ist.

Unter akustischer Transparenz wird im Zusammenhang mit der vorliegenden Erfindung die Eigenschaft verstanden, den auf die Fläche auftreffenden Schall möglichst ungehindert in die Kernlage hinein passieren zu lassen. Die akustische Transparenz bezieht sich dabei insbesondere auf den Frequenzbereich der Sprachverständlichkeit, um einen Eintrag von Lärm in diesem Frequenzbereich in den Kabinenbereich zu verhindern. Für den Frequenzbereich der Sprachverständlichkeit wird üblicherweise ein Bereich von 500 bis 4.000 Hz angegeben.

Die akustische Transparenz bedeutet also, dass Schallwellen möglichst in dem gesamten genannten Frequenzbereich durchgelassen werden sollen. Nur dann ist eine Beeinflussung der Akustik im Sinne einer Verbesserung der Aufenthaltsqualität im Kabinenbereich möglich.

Die akustische Transparenz wird, vereinfacht gesagt, von der Zusammenwirkung zwischen den verwendeten Materialien und deren Befestigung bzw. Konstruktion bestimmt. Zu unterscheiden ist zunächst in luftdurchlässige und luftundurchlässige Werkstoffe. Die akustische Transparenz von luftdurchlässigen Materialien wird dabei durch deren Strömungswiderstand gekennzeichnet. Luftundurchlässige Materialien weisen nur unter bestimmten Randbedingungen eine akustische Transparenz auf. Beispielsweise kann ein dünner, leichtgewichtiger plattenförmiger luftundurchlässiger Werkstoff bei loser Aufhängung einen Frequenzbereich ungehindert weitergeben, indem die Platte den Luftschwingungen keinen, bzw. nahezu keinen, Widerstand entgegensetzt und die Schallwellen die Schicht ungehindert, bzw. nahezu ungehindert, passieren können. Diese Werkstoffe sind somit durch ein sehr niedriges frequenzabhängiges Schalldämmaß gekennzeichnet. Dagegen bietet derselbe Werkstoff in fest eingespanntem Zustand, insbesondere bei Einspannung in geringen Abständen, einen wesentlich größeren Widerstand für die auftreffenden Schallwellen. Entscheidend für die Beurteilung der akustischen Transparenz ist daher die tatsächliche erreichte Wirkung und nicht eine isolierte Betrachtung eines Materials an sich oder lediglich die Betrachtung einer bestimmten Konstruktion.

Gemäß einer beispielhaften Ausführungsform der Erfindung weist die zweite Decklage einen Strömungswiderstand auf, der nicht größer als 1000 Ns/m³ ist. Gemäß einer beispielhaften Ausführungsform der Erfindung ist die zweite Decklage perforiert.
Gemäß einer beispielhaften Ausführungsform der Erfindung weist die zweite Decklage eine Mikroperforation auf.
Gemäß einer beispielhaften Ausführungsform der Erfindung ist die zweite Decklage luftdicht ausgebildet.
Gemäß einer beispielhaften Ausführungsform der Erfindung ist die zweite Decklage feuchtigkeitsundurchlässig.

Die feuchtigkeitsundurchlässige Ausbildung der zweiten Deckschicht bietet sich beispielsweise für Bereiche an, in denen es, beispielsweise aufgrund von Kondensation, zu Feuchtigkeitsanfall innerhalb des Luftführungssystems kommen kann. Durch Verhindern des Eintritts von Feuchtigkeit in das absorbierende Kernmaterial wird die akustische Funktion, das heißt die schalldämmende Wirkung, aufrechterhalten bzw. dauerhaft gewährleistet. Außerdem bietet eine feuchtigkeitsundurchlässige zweite Deckschicht auch Vorteile bei der Reinigung, beispielsweise bei besonders beanspruchten oder zur Verschmutzung neigenden Luftführungsbereichen.

Gemäß einer beispielhaften Ausführungsform der Erfindung ist die zweite Decklage als Dampfsperre (auch "Dampfbremse" genannt) ausgebildet.

Mit dem Begriff "Dampfbremse" wird im Rahmen dieser Erfindung eine Schicht, z.B. eine Folie, bezeichnet, mit der das Diffundieren von Wasserdampf in die dahinterliegende Schicht, d.h. die akustisch wirksame Kernschicht, eingeschränkt wird. Mit anderen Worten, unter einer Dampfbremse wird eine Schicht mit dampfdiffusionshemmenden Eigenschaften bezeichnet. Als dampfdiffusionshemmend gelten Schichten, die einen

Wasserdampfdiffusionswiderstand, der als s_{d}-Wert bezeichnet und die diffusionsäquivalente Luftschichtdicke abbildet, von s_{d}-Wert 0,5 m bis 1500 m aufweisen.

Gemäß einer beispielhaften Ausführungsform der Erfindung ist die zweite Decklage als Dampfsperre ausgebildet.

Mit dem Begriff "Dampfsperre" wird im Rahmen dieser Erfindung eine Schicht, z.B. eine Folie, bezeichnet, mit der das Diffundieren von Wasserdampf in die dahinterliegende Schicht, d.h. die akustisch wirksame Kernschicht, verhindert wird, wobei eine Schicht mit einem s_{d}-Wert von größer als 1500 m als praktisch völlig dampfdiffusionsdicht zu betrachten ist.

Gemäß einer beispielhaften Ausführungsform der Erfindung ist die zweite Decklage flächig mit der Kernlage verbunden.

Gemäß einer beispielhaften Ausführungsform der Erfindung bewirkt die flächige Verbindung zwischen der Kernlage und der zweiten Decklage eine Verbundwirkung derart, dass die Wandung selbsttragend ist.

Gemäß einer beispielhaften Ausführungsform der Erfindung bildet die Kernlage zusammen mit der ersten Decklage und der zweiten Decklage einen sandwichartigen Wandaufbau.

Gemäß einer beispielhaften Ausführungsform der Erfindung weist die Wandung an ihren stirnseitigen Enden eine abschließende Decklage auf, die das Kernmaterial auf den nach außen weisenden Flächen luftdicht abschließt.

Gemäß einer beispielhaften Ausführungsform der Erfindung entspricht das Material der abschließenden Decklage dem Material der ersten Decklage.

Gemäß einer beispielhaften Ausführungsform der Erfindung ist die abschließende Decklage mit der ersten Decklage einstückig ausgebildet.

Gemäß einer beispielhaften Ausführungsform der Erfindung ist der durchgehende Hohlraum längsgerichtet ausgebildet und die schalldämpfende Wandung umschließt den Hohlraum auf den Längsseiten wenigstens teilweise.

Gemäß einer beispielhaften Ausführungsform der Erfindung ist der durchgehende Hohlraum längsgerichtet ausgebildet und die schalldämpfende Wandung umschließt den Hohlraum auf den Längsseiten vollständig.

Das vollständige Umschließen bietet den Vorteil, dass eine kompakte Außenwandung ausgebildet werden kann, so dass für die Befestigung einheitliche Bedingungen vorliegen. Beispielsweise können Luftführungselemente mit einem einheitlichen Querschnitt ausgebildet werden, der sich für die Befestigung, zum Beispiel mit Rohrschellen, eignet.

Gemäß einer beispielhaften Ausführungsform der Erfindung ist die Luftaustrittsöffnung als eine Luftaustrittsöffnung zur Einleitung der Luft in einen Kabineninnenraum ausgebildet.

Gemäß einer beispielhaften Ausführungsform der Erfindung bildet die Luftaustrittsöffnung einen fächerförmigen Luftauslass und die schalldämpfende Wandung ist an den Seitenflächen des Fächers angeordnet.

Da die Luftaustrittsöffnungen, bezogen auf die Luftzufuhr, das abschließende oder letzte Element darstellen, ist das Vorsehen einer schalldämpfenden Wirkung in diesem Bereich besonders von Bedeutung, unabhängig von der Ausbildung von beispielsweise düsenartigen Öffnungen, an denen der möglichen Schallentwicklung ein besonderes Augenmerk zu schenken ist.

Außerdem ist als weitere beispielhaften Ausführungsform der Erfindung ein Flugzeug mit einer Rumpfkonstruktion und einer innerhalb des Rumpfes ausgebildeten Kabine, sowie einer Klimaanlage vorgesehen, die eine Luftaufbereitungseinheit, und Luftführungen mit Luftaustrittsöffnungen aufweist, wobei die Luftführungen die Luft von der Luftaufbereitungseinheit zu den Luftaustrittsöffnungen leiten, um die aufbereitete Luft in den Kabinenraum einzubringen, und wobei die Luftführungen wenigstens teilweise eine Klimaanlagenluftführung nach einer der vorhergehenden Ausführungsformen aufweisen.

Dadurch wird ein Flugzeug zur Verfügung gestellt, bei dem die akustischen Innenraumverhältnisse in der Kabine oder auch im Cockpit dahingehend verbessert sind, dass es aufgrund der Klimaanlage nicht zu einem Schalleintrag über die Luftführungen kommt. Die erfindungsgemäßen Klimaanlagenluftführungen mit schalldämpfender Wirkung gewährleisten neben der Reduktion des Schalleintrags durch die Luftführungen in den Innenraum hinein außerdem auch eine kompaktere, d.h. dünnere, und leichtere Bauweise. Die kompaktere Bauweise bedeutet gleichzeitig, dass weniger Bauraum benötigt wird, so dass innerhalb der Rumpfkonstruktion des Flugzeugs mehr Raum für die eigentliche Nutzung zur Verfügung steht. Mit anderen Worten, durch die kompaktere Bauweise kann der für die Passagiere zur Verfügung stehende Raum optimiert bzw. vergrößert werden. Die kompaktere Bauweise ermöglicht außerdem einen größeren Luftwechsel, da der lichte Querschnitt innerhalb der Klimaanlagenluftführung vergrößert werden kann bei Einhaltung der bisher üblichen Außendimensionen, da der mehrlagige Wandaufbau der erfindungsgemäßen Klimaanlageluftführung bei verringertem Querschnitt verbesserte akustische Absorptionseigenschaften bei mindestens gleicher Stabilität aufweist.

Außerdem ergibt sich der Vorteil, dass die Klimaanlagenluftführungen insgesamt ein geringeres Gewicht aufweisen, da es aufgrund der Verbundwirkung der Kernlage mit der ersten Decklage zu einer ausreichenden Stabilität kommt und die bisher üblichen Rohre, beispielsweise aus Kunststoff, nicht mehr erforderlich sind. Mit anderen Worten, mit den erfindungsgemäßen Klimaanlagenluftführungen lassen sich die bisher üblichen Rohrkonstruktionen mit den zusätzlichen Absorbern ersetzen, was zu der bereits erwähnten Gewichtseinsparung führt. Da beispielsweise innerhalb eines Verkehrsflugzeugs insgesamt eine sehr große Zahl an laufenden Metern von Klimaanlagenluftführungen eingebaut werden, ist diese Gewichtseinsparung nicht unerheblich. Eine Verringerung des Bauteilgewichts bedeutet gleichzeitig eine Verringerung des Kraftstoffbedarfs des Flugzeugs bzw. erlaubt eine größere Zuladung oder Nutzlast bei gleichem Kraftstoffverbrauch.

Es sei darauf hingewiesen, dass die vorhergehenden Darstellungen der Erfindung und der Ausführungsbeispiele sowie der folgenden Beispielsbeschreibungen sowie die Ansprüche von ihrem Wortlaut her auf ein Luftfahrzeug ausgerichtet sind, wobei an einigen Stellen auf ein Flugzeug Bezug genommen wird. Im Rahmen der vorliegenden Erfindung wird unter dem Begriff Luftfahrzeug neben Flugzeugen auch andere Luftfahrzeuge, insbesondere auch Hubschrauber verstanden. Die Erfindung und der Schutzbereich der Ansprüche beziehen sich daher auf Luftfahrzeuge im Allgemeinen, wie zum Beispiel Flugzeuge und Hubschrauber, insbesondere auch Verkehrsflugzeuge.

Nachfolgend wird anhand der beigefügten Zeichnungen näher auf Ausführungsbeispiele der Erfindung eingegangen. Es zeigen:
- Fig. 1: einen Querschnitt durch ein Flugzeug mit einer Klimaanlage mit erfindungsgemäßen Klimaanlagenluftführungen;
- Fig. 2: eine schematische Darstellung eines Längsschnitts durch eine Klimaanlagenluftführung gemäß einer ersten beispielhaften Ausführungsform der Erfindung;
- Fig. 3: einen schematischen Querschnitt durch die Klimaanlagenluftführung nach Fig. 2;
- Fig. 4: eine schematische Querschnittsdarstellung durch eine weitere beispielhafte Ausführungsform einer erfindungsgemäßen Klimaanlagenluftführung;
- Fig. 5: einen Querschnitt einer weiteren beispielhaften Ausführungsform;
- Fig. 6: einen Querschnitt durch eine weitere beispielhafte Ausführungsform;
- Fig. 7: einen Längsschnitt durch eine weitere beispielhafte Ausführungsform einer Klimaanlagenluftführung;
- Fig. 8: eine weitere beispielhafte Ausführungsform einer erfindungsgemäßen Klimaanlagenluftführung;
- Fig. 9: einen schematischen Längsschnitt durch eine beispielhafte Ausführungsform mit einer als fächerförmige Luftaustrittsöffnung ausgebildeten Klimaanlagenluftführung;
- Fig. 10: einen Schnitt quer zur Fächerrichtung durch die Klimaanlagenluftführung nach Fig. 9;
- Fig. 11: einen Längsschnitt durch eine weitere beispielhafte Luftaustrittsöffnung;
- Fig. 12: einen Schnitt quer zur Fächerrichtung durch eine weitere beispielhafte Luftaustrittsöffnung; und

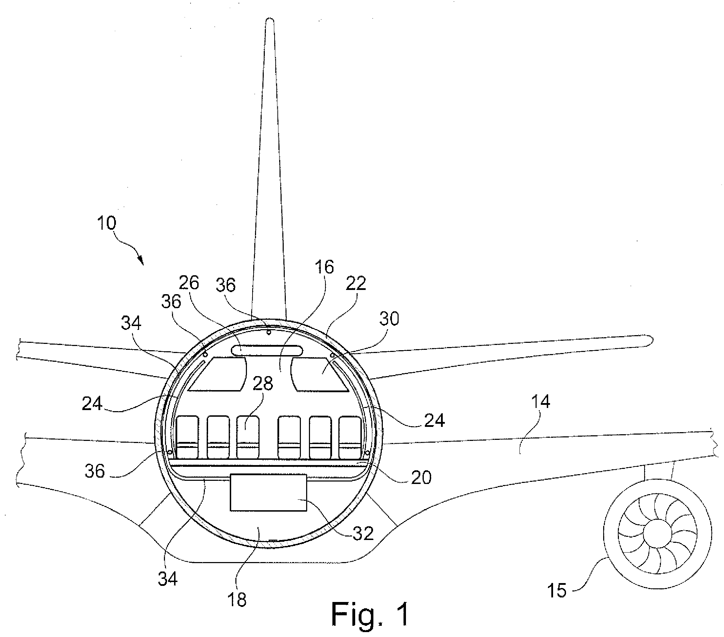

- Fig. 1: 3 eine weitere beispielhafte Ausführungsform einer Luftaustrittsöffnung.

Fig. 1 zeigt ein Flugzeug 10 mit einem Flugzeugrumpf 12 und zwei seitlich daran anschließenden Flügeln 14, an denen Triebwerke 15 vorgesehen sind. Der Flugzeugrumpf 12 ist in Fig. 1 quer zu seiner Längsachse geschnitten dargestellt. Der Flugzeugrumpf 12 ist in einen oberen Kabinenbereich 16 und einen darunter angeordneten Frachtbereich 18 durch einen horizontal verlaufenden Boden 20 unterteilt. Der Flugzeugrumpf 12 weist weiter eine im Wesentlichen umlaufende Flugzeugaußenhaut 22 auf, die an einer nicht näher dargestellten Flugzeugrumpfstruktur befestigt ist. Die Flugzeugrumpfstruktur besteht vereinfacht gesagt aus einer Art tragenden Struktur aus Spanten und Stringern und gewährleistet eine stabile Konstruktion zur Aufnahme der äußeren und inneren Lasten.

Im oberhalb des Bodens 20 angeordneten Kabinenbereich 16 befinden sich entlang der Außenwand 22 seitliche Kabinenverkleidungen 24 sowie eine im oberen Bereich vorgesehene obere Kabinenverkleidung 26. Die Elemente der Kabinenverkleidung 24, 26 umschließen zusammen mit dem Boden 20 einen Innenraum, das heißt die Kabine. Innerhalb der Kabine sind beispielsweise Sitze 28 für die Passagiere angeordnet. Weiter sind zum Beispiel Gepäckaufnahmefächer 30 vorgesehen, die sich im Wesentlichen oberhalb der Sitzreihen befinden und der Aufnahme des Handgepäcks der Passagiere dienen. Weiter sind im Kabinenbereich 16 auch diverse Versorgungsleitungen, zum Beispiel für eine Not-Sauerstoffversorgung, elektrische Versorgung etc. vorgesehen, die jedoch in Fig. 1 nicht näher dargestellt sind.

Zur Versorgung des Kabinenbereichs 16 mit ausreichender Frischluft in geeigneter Zusammensetzung ist außerhalb des Kabinenbereichs 16 eine Luftaufbereitungseinheit 32 eines Klimaanlagensystems der Flugzeugs 10 vorgesehen. Die Luftaufbereitungseinheit 32 ist beispielsweise im Bereich unterhalb des Bodens 20 angeordnet, zum Beispiel in der Mitte des Flugzeugs kurz vor dem Flügelkasten, das heißt an einer Stelle, an der der Frachtbereich 18 in seiner Nutzung nicht beeinträchtigt ist, da hier meist noch ein Center-Tank für Treibstoff vorgesehen ist und der Frachtraum dadurch bereits schon geteilt ist.

Die Luftaufbereitungseinheit 32 dient dazu, den Passagierbereich bzw. Kabinenbereich 16 sowie auch das nicht dargestellte Cockpit mit ausreichender Frischluft zu versorgen und verbrauchte Luft aus den Bereichen abzuführen. Dazu weist die Luftaufbereitungseinheit 32 unter anderem eine nicht näher gezeigte Temperierungseinheit auf, mit der die Zuluft für die Kabine auf ein gewünschtes Maß abgekühlt bzw. erwärmt werden kann. Weiter ist eine nicht näher dargestellte Luftfeuchteregulierungseinheit vorgesehen, mit der die für die Kabine vorgesehene Zuluft auf eine gewünschte Luftfeuchtigkeit eingestellt werden kann.

Die Luftaufbereitungseinheit 32 ist über Versorgungsleitungen 34 mit Verteilleitungen 36 verbunden, die beispielsweise zwischen der Flugzeugaußenhaut 22 und den seitlichen Kabinenverkleidungen 24 sowie der oberen Kabinenverkleidung 28 angeordnet sein können. An den Verteilungsleitungen 36, die im Wesentlichen in Längsrichtung des Luftfahrzeugs verlaufen, ist eine Vielzahl von in Fig. 1 nicht näher dargestellten Lufteinlässen bzw. Absaugöffnungen vorgesehen, mittels derer die Zuluft in den Kabinenbereich 16 eingebracht wird bzw. die Abluft aus dem Kabinenbereich 16 entnommen wird. Beispielsweise erfolgen das Einbringen der Zuluft in einem unteren Bereich der seitlichen Kabinenverkleidungen 24 und das Absaugen der verbrauchten Luft in einem oberen Bereich der seitlichen Kabinenverkleidungen 24 bzw. im Bereich der oberen Kabinenverkleidung 28.

Die Versorgungsleitungen 34 können auch an einer zentralen Verteilungsleitung angeschlossen sein, die ausgehend von der Luftaufbereitungseinheit 32 zunächst eine in Längsrichtung des Flugzeugs vorgesehene Grundleitung darstellt, von der dann mehrere Versorgungsleitungen 34 abgehen, was jedoch nicht näher dargestellt ist.

Um innerhalb der Kabine bezogen auf die Temperatur geeignete Aufenthaltsbedingungen zur Verfügung zu stellen, ist in der Außenwandkonstruktion beispielsweise eine Wärmedämmung vorgesehen.

Außerdem ist die Außenwandkonstruktion möglichst schalldämmend ausgebildet, um einen Lärmeintrag von den Turbinen 15 in die Kabine 16 hinein auf ein Minimum zu beschränken. Neben der raumabschließenden Funktion der Kabinenverkleidungselemente 24, 26 können diese auch zur Beeinflussung der akustischen Verhältnisse innerhalb der Kabine 16 herangezogen werden. Dazu können die Kabinenpaneele 24, 26 beispielsweise schallabsorbierend ausgestaltet werden.

Neben den Triebwerken 15 und der äußeren Luftumströmung des Rumpfes entlang der Flugzeugaußenhaut 22 ist die Klimaanlage eine weitere Lärmquelle bezogen auf den Innenraum, das heißt den Kabinenbereich 16. Der Lärm wird dabei im Wesentlichen von den Gebläsen der Klimaanlage erzeugt, die in der Luftaufbereitungseinheit 32 vorgesehen sind, um den nötigen Lufttransport zur Kabine hin und von der Kabine weg zu gewährleisten. Der Lärm von den Gebläsen wird innerhalb des Rohrsystems weitergeleitet und schließlich über die Luftauslässe in die Kabine abgestrahlt.

Zur Reduktion dieses Lärmanteils ist erfindungsgemäß vorgesehen, Klimaanlagenluftführungen mit schalldämpfender Wirkung gemäß der Erfindung in den Geräuschpfad zu integrieren, das heißt zwischen der Luftaufbereitungseinheit 32 und denjenigen Stellen, an denen die Luft in den Kabinenbereich 16 eingeblasen bzw. aus dem Kabinenbereich 16 abgesaugt wird.

Die dazu vorgesehenen Klimaanlagenluftführungen werden anhand der folgenden Figuren näher erläutert.

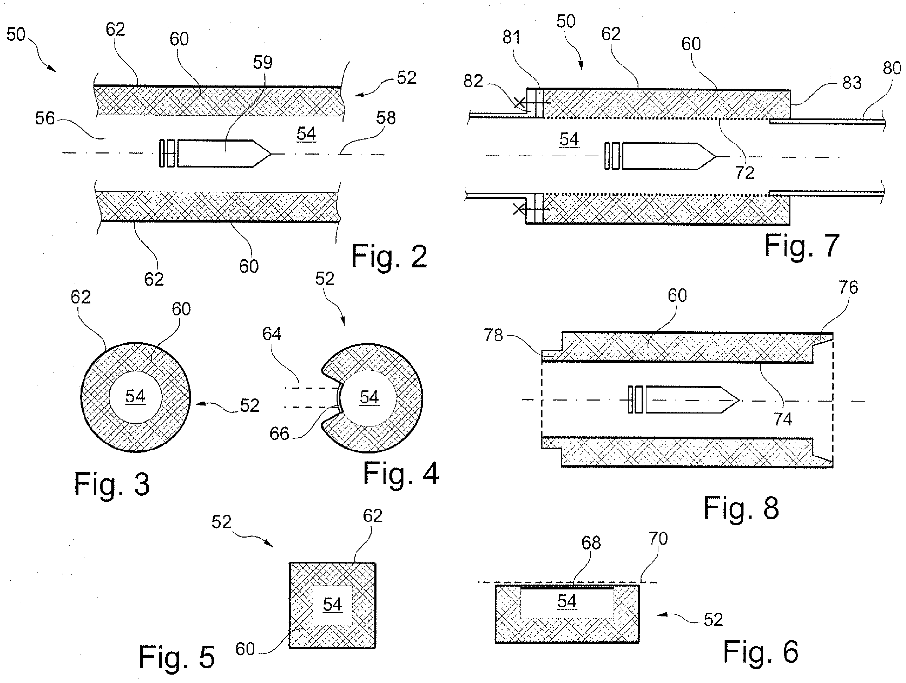

Gemäß einem ersten Ausführungsbeispiel ist in Fig. 2 eine Klimaanlagenluftführung 50 gezeigt, bei der eine schalldämpfende Wandung 52 einen durchgehenden Hohlraum 54 zur Führung der Luft wenigstens teilweise umgibt. Der durchgehende Hohlraum 54 ist mit einer Lufteintrittsöffnung 56 und einer Luftaustrittsöffnung 58 versehen, d.h. die Luft kann den Hohlraum 54 durchströmen, bzw. die Klimaanlagenluftführung leitet die Luft, was mit einem Pfeil 59 angedeutet ist.

Wie in den Figuren zu erkennen ist, grenzt der Hohlraum zur Luftführung unmittelbar an die Wandung an. Die Wandung bildet also wenigstens teilweise den seitlichen Abschluss des Hohlraums, d.h. das transportierte gasförmige Medium, beispielswiese Zu- oder Abluft bei einer Flugzeugkabine, steht in unmittelbarem akustischen Kontakt zur Wandung, die damit auch eine direkte schalldämpfende Wirkung auf den Bereich des Hohlraums ausüben kann.

Die Wandung 52 weist einen mehrlagigen Aufbau auf mit einer Kernlage 60 und wenigstens einer ersten Decklage 62. Die Kernlage besteht aus einem schallabsorbierenden offenporigen Kernmaterial. Die erste Decklage 62 ist luftdicht ausgebildet und auf der außen liegenden Seite der Kernlage 60 angeordnet und flächig mit der Kernlage 60 verbunden. Die flächige Verbindung zwischen der Kernlage 60 und der ersten Decklage 62 bewirkt eine Verbundwirkung derart, dass die Wandung 52 selbsttragend ist und eine Strukturfunktion aufweist, um mechanisch auftretende Lasten an tragende Teile des Luftfahrzeugs übertragen zu können.

Durch das Kernmateriel weist die Wandung eine Akustikwirkung auf. Durch die Verbundwirkung weist die Wandung auch eine Tragewirkung oder strukturelle Wirkung auf. Die Wandung übernimmt also zwei verschiedene Funktionen, d.h. die statische Funktion des Tragens und Aufnehmens, bzw. Weiterleitens und Verteilens von einwirkenden Kräften wie Eigengewicht, Schwingungen, Druckunterschieden etc., und die akustische Dämpfung bzw. Dämmung, also die Reduktion der von der Luftführung ausgehenden Schallemissionen.

Gemäß der gezeigten beispielhaften Ausführungsform besteht die Kernlage 60 aus einem offenporigen Schaumwerkstoff. Die Verwendung eines Schaums als Kernwerkstoff hat den Vorteil, dass bereits bei der Herstellung der Wandung, beispielsweise als Halbzeug, die später zum Einsatz kommende Dicke der Kernlage berücksichtigt werden kann. Gleichzeitig bietet ein offenporiger Schaumwerkstoff auch gute Wärmedämmeigenschaften sowie hervorragenden Absorptionseigenschaften.

Die Kernlage 60 bildet vorzugswiese auch eine thermische Isolierung gegenüber der Umgebung, beispielsweise dem Zwischenraum zwischen der Außenhaut 22 und den Kabinenverkleidungen 24 bzw. 26.

Die Kernlage 60 ist statisch wirksam, so dass eine zusätzliche Wandung, beispielsweise ein Rohr aus Kunststoff, im Bereich der Wandung 52 nicht erforderlich ist. Dies bedeutet eine leichtere Konstruktion bei gleichzeitig verbesserten akustischen Eigenschaften, da die Kernlage 60 in Verbund mit der ersten Decklage 62 somit neben der statischen Funktion und der thermischen Isolierung auch die akustische Aufgabe der Schallabsorption übernimmt. Die Kernlage tritt also funktional und konstruktiv an die Stelle einer üblichen Rohrwandung. Zusätzlich übernimmt die Kernlage aber auch die akustische Dämpfung bzw. Dämmung. Die Funktion des luftdichten Abschlusses übernimmt beispielsweise die erste Deckschicht. Gemäß einem weiteren Beispiel ist die Kernlage zumindest in ihrer Gesamtwirkung über den kompletten Querschnitt luftdicht ausgebildet. Beispielsweise kann Luft und damit auch Luftschall in die Kernlage eindringen, jedoch nicht durch diese hindurch nach außen treten, zumindest nicht in einem Maße, dass es die Luftführung beeinträchtigen würde.

Die Kernlage kann dabei den Hohlraum beispielsweise komplett umschließen, wie dies in den Figuren gezeigt ist. Gemäß einem anderen Beispiel, nicht näher gezeigt, ist die Kernlage nur teilweise vorgesehen und die anderen Bereiche werden von anders gestalteten Wandbereichen umgeben, z.B. durch dünnere Wandungen bei engen Bauraumverhältnissen oder durch Kühlflächen, z.B. an Außenwandbereichen.

Bei der gezeigten Klimaanlagenluftführung 50 handelt es sich beispielsweise um eine rohrförmig ausgebildete Luftführung zur Zufuhr von Frischluft an den Kabinenraum 16 oder zur Abfuhr von Abluft aus dem Kabinenraum.

Gemäß einer ersten Ausführungsform umschließt die Wandung 52 den durchgehenden Hohlraum 24 vollständig, wie dies in Fig. 3 schematisch gezeigt ist.

Gemäß einer zweiten Ausführungsform umschließt die Wandung 52 den Hohlraum 54 nur teilweise, was sich beispielsweise für Luftführungsbereiche anbietet, bei denen eine Vielzahl von Abzweigungen vorgesehen sind, wie dies beispielsweise in Fig. 4 mit einer Abzweigung 64 angedeutet ist. Der nicht von der Wandung 52 umschlossene Bereich ist mit einer Abdeckwandung 66 verschlossen, an welcher die Abzweigungen angeschlossen sein können.

Die Klimaanlagenluftführung gemäß der vorliegenden Erfindung kann neben den gezeigten kreisrunden Querschnitten (Fig. 3 bzw. Fig. 4) auch andere Querschnittsformen aufweisen, beispielsweise oval oder ellipsoid bzw. auch quadratisch oder rechteckig, wie dies in Fig. 5 angedeutet ist, wobei dort die Wandung 52 den Hohlraum 54 vollständig umschließt.

In Fig. 6 ist in einer weiteren Ausführungsform ein rechteckiger Querschnitt gezeigt, bei dem die Wandung 52 den Hohlraum 54 nur teilweise umschließt. Dadurch ist es beispielsweise möglich, an derjenigen Seite des Hohlraums 54 einen Wandungsbereich 68 vorzunehmen, der den Hohlraum nach dieser Seite abschließt und gleichzeitig dazu vorgesehen sein kann, einen thermischen Kontakt zu einer thermisch nutzbaren Fläche 70 herzustellen, die in Fig. 6 jedoch nur mit einer gestrichelten Linie angedeutet ist.

Beispielsweise kann die Klimaanlagenluftführung nach Fig. 6 dann vorgesehen werden, wenn die Luft in dem Hohlraum 54 durch einen Wärmeaustausch über den Wandungsbereich 68 bzw. die Fläche 70 abgekühlt werden soll, beispielsweise entlang eines Außenwandbereichs, um damit die Kühllast der Luftautbereitungseinheit 32 zu reduzieren.

Die in Fig. 6 gezeigte Ausführungsform kann beispielsweise auch benutzt werden, um die Luft an einer warmen Fläche, beispielsweise einer Kabinenverkleidung vorzuwärmen. In diesem Fall kann die Luft erwärmt und gleichzeitig der Kabineninnenbereich gekühlt werden, indem die Klimaanlagenluftführung entlang eines Kabinenpaneels der Kabinenverkleidung 24, 26 geführt wird und über die Wandung 68 ein thermischer Kontakt zu der Kabinenverkleidung hergestellt wird, so dass die vorbeistreichende Luft einen Wärmeaustausch bewirkt. Dadurch wird die von der Luftaufbereitungseinheit 32 aufbereitete Zuluft vorgewärmt, bevor die Luft in den Kabinenbereich 16 eingeblasen wird.

Gemäß einer weiteren Ausführungsform kann der Wärmeaustausch über die Wandungsfläche 68 auch für Abluft verwendet werden, indem beispielsweise die abgesaugte Luft vorgewärmt bzw. vorgekühlt wird, bevor diese in der Luftaufbereitungseinheit 32 aufbereitet wird. Beispielsweise wird dort ein Teil der abgesaugten Luft mit frischer Zuluft vermischt, um einen notwendigen Sauerstoffmindestgehalt in der Kabinenluft zu gewährleisten.

Die luftdichte Ausbildung der ersten Deckschicht 62 bewirkt, dass aus der Klimaanlagenluftführung 50 keine Luft heraustreten kann.

Gemäß einer nicht näher dargestellten Ausführungsform ist die erste Decklage 62 schalldämmend ausgebildet. Dadurch wird in denjenigen Bereichen der Rumpfkonstruktion, in der es aufgrund anderer Lärmquellen zu einem Lärmeintrag in die Luftführung kommen könnte, verhindert, dass externer Lärm über die Luftführung in den Kabinenbereich gelangen kann.

Die erste Decklage 62 ist gemäß einer weiteren Ausführungsform integral mit der Kernlage 60 ausgebildet. Beispielsweise ist die erste Decklage 62 einstückig mit der Kernlage 60 ausgebildet.

Gemäß einer nicht näher gezeigten Ausführungsform ist die erste Decklage 62 durch Schließen der äußeren Poren des offenporigen Kernmaterials der Kernlage 60 erzeugt.

Beispielsweise wird die erste Decklage 62 durch Verdichten der äußeren Schicht des Kernmaterials der Kernlage 60 erzeugt, zum Beispiel durch Verschmelzen des äußeren Bereichs des Kernmaterials, was jedoch in den Figuren nicht näher dargestellt ist.

Gemäß einem weiteren Ausführungsbeispiel, das in Fig. 7 gezeigt ist, ist eine zweite Decklage 72 vorgesehen, die auf der innen liegenden Seite der Kernlage 60 angeordnet ist, wobei die zweite Decklage 72 akustisch transparent ausgebildet ist. In dem in Fig. 7 gezeigten Ausführungsbeispiel ist die zweite Decklage 72 perforiert; beispielsweise weist die zweite Decklage 72 eine Mikroperforation auf.

Gemäß einem weiteren Ausführungsbeispiel, das in Fig. 8 gezeigt ist, ist eine zweite Decklage 74 vorgesehen, die feuchtigkeitsundurchlässig ist. Die ebenfalls auf der Innenseite der Kernlage 60 angeordnete zweite Decklage 74 kann beispielsweise als Feuchtigkeitsbremse oder sogar als Dampfsperre ausgebildet sein, so dass verhindert wird, dass Feuchtigkeit in die Kernlage 60 eindringt.

Gemäß einer weiteren Ausführungsvariante, die jedoch nicht näher dargestellt ist, ist die zweite Decklage 74 luftdicht ausgebildet.

Um die akustische Wirkung des Kernmaterials der Kernlage 60 zu gewährleisten, muss die zweite Decklage 72, 74 jedoch auf jeden Fall akustisch durchlässig ausgebildet sein, damit Schall in die Kernlage 60 eintreten kann, um dort absorbiert zu werden.

Beispielsweise ist die zweite Decklage 72, 74 flächig mit der Kernlage verbunden, so dass die flächige Verbindung zwischen der Kernlage 60 und der zweiten Decklage 72, 74 eine Verbundwirkung derart bewirkt, dass die Wandung selbsttragend ist. Dadurch wird eine noch größere Stabilität der erfindungsgemäßen Klimaanlagenluftführung ermöglicht, da die Kernlage zusammen mit der ersten Decklage und der zweiten Decklage einen sandwichartigen Wandaufbau bildet.

Gemäß der in Fig. 8 gezeigten Ausführungsform kann die erfindungsgemäße Klimaanlagenluftführung an ihren stirnseitigen Enden mit einem Kupplungssystem ausgestattet sein, so dass sich die beispielsweise als Rohrelemente oder Rohrsegmente vorgesehenen Klimaanlagenluftführungen an ihren Enden durch Ineinanderstecken verbinden lassen. Dies ist in Fig. 8 durch einen nach außen weisenden umlaufenden Vorsprung 76 an der Stirnseite der Kernlage 60 und einen am gegenüberliegenden Stirnende vorgesehenen, nach innen weisenden zweiten umlaufenden Vorsprung 78 angedeutet.

Dieses Kupplungssystem kann auch für die anhand der anderen Figuren beschriebenen Ausführungsvarianten vorgesehen sein.

Selbstverständlich handelt es sich bei den Vorsprüngen 76, 78 nur um eine von vielen denkbaren Verbindungssysteme, mit denen mehrere Klimaanlagenluftführungssegmente gemäß der Erfindung miteinander verbunden werden können.

Gemäß einer weiteren Ausführungsform ist vorgesehen, die erfindungsgemäßen Ausführungsvarianten der Klimaanlagenluftführung für ein Luftfahrzeug mit üblichen Rohrsegmenten, beispielsweise aus Kunststoff, zu verbinden, bei denen keine akustische Absorber vorgesehen sind.

Eine derartige Verbindung ist in Fig. 7 angedeutet, bei der am rechten stirnseitigen Ende des Klimaanlagenluftführungssegments ein Rohrsegment 80 in das Klimaanlagenluftführung 50 eingeschoben ist.

Eine andere Variante ist in Fig. 7 am gegenüberliegenden, d.h. in der Abbildung linken Stirnende gezeigt, bei der an der Klimaanlagenluftführung ein Flansch 81 vorgesehen ist, an dem ein Gegenflansch 82 eines anzuschließenden Rohrsegments befestigt ist.

Selbstverständlich kann statt des Einschiebens auch ein separates Kupplungssegment vorgesehen sein, mit dem das absorbierende Klimaanlagenluftführungssegment mit dem nicht absorbierenden Rohrsegment 80 verbunden wird. Die Verbindung mit anderen Rohrsegmenten ist gemäß der Erfindung auch für die anderen Ausführungsbeispiele der erfindungsgemäßen Klimaanlagenluftführung vorgesehen.

Wie in Fig. 7 außerdem zu erkennen ist, weist gemäß eines Ausführungsbeispiels die Wandung 60 an ihren stirnseitigen Enden, in diesem Fall am rechten Ende, eine abschließende Decklage 83 auf, die das Kernmaterial auf den nach außen weisenden Stirnflächen luftdicht abschließt. Beispielsweise entspricht das Material der abschließenden Decklage 83 dem Material der ersten Decklage 62.

Zum Beispiel kann die abschließende Decklage 83 mit der ersten Decklage 62 einstückig ausgebildet sein.

Gemäß einer Ausführungsvariante ist die Luftaustrittsöffnung 58 als eine Luftaustrittsöffnung zur Einleitung der Luft in einen Kabineninnenraum ausgebildet.

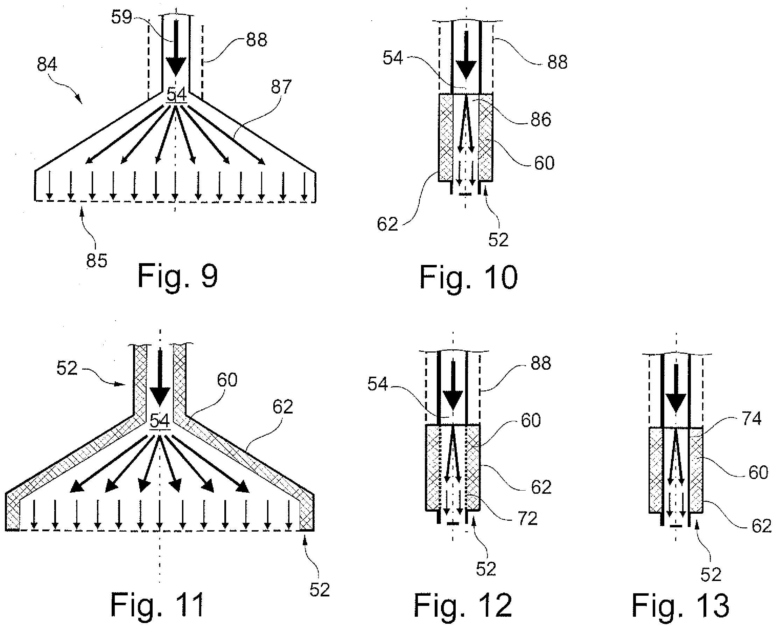

Beispielsweise bildet die Luftaustrittsöffnung einen fächerförmigen Luftauslass 84, der in einem Längsschnitt in Fig. 9 schematisch dargestellt ist. Wie aus Fig. 10 ersichtlich ist, ist die schalldämpfende Wandung 52 an den Seitenflächen des Fächers 84 angeordnet. Mit anderen Worten, gemäß der in Fig. 10 gezeigten Querschnittsdarstellung des Fächers nach Fig. 9, umschließt die Kernlage 60 einen fächerförmigen Verteilungshohlraum 86 auf den beiden Längsseiten des Fächers.

Die Luftverteilung auf eine Vielzahl von Austrittsöffnungen 85 ist mit Pfeilen 87 angedeutet.

Wie in Fig. 10 durch eine gestrichelte Linie schematisch dargestellt, kann die akustisch absorbierende Wandung 52 auch im Bereich der eigentlichen Rohrführung, in Fig. 9 und 10 oberhalb des fächerförmigen Bereichs, vorgesehen sein bzw. vom Rohrbereich in den Fächerbereich übergehen.

Gemäß einer weiteren Ausführungsform, die in Fig. 11 angedeutet ist, ist die akustisch wirksam Wandung 52 auch an den stirnseitigen bzw. seitlichen Bereichen des fächerförmigen Auslasses 84 vorgesehen, so dass die akustisch wirksame Wandung 52 den Hohlraum des fächerförmigen Verteilerbereichs vollständig umgibt.

In der in Fig. 12 gezeigten Ausführungsform ist die Kernlage 60 auf der dem Hohlraum 54 zugewandten Seite mit der zweiten Decklage 72 versehen, die bereits im Zusammenhang mit Fig. 7 erwähnt worden ist. Bei der in Fig. 13 dargestellten Ausführungsform weist die Kernlage 60 auf der dem Hohlraum 54 zugewandten Seite die zweite Decklage 74 auf, die anhand des Beispiels von Fig. 8 erläuterte worden ist. Sowohl bei Fig. 11 als auch bei Fig. 12 ist durch die gestrichelte Line 88 angedeutet, dass die erfindungsgemäße akustisch absorbierende Wandung 52 auch im an den Verteilungsfächerbereich anschließenden rohrförmigen Luftführungsbereich vorgesehen sein kann.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, innerhalb des durch die Ansprüche definierten Schutzes auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Klimaanlagenluftführung (50) mit schalldämpfender Wirkung für ein Luftfahrzeug, mit einer schalldämpfenden Wandung (52), die einen durchgehenden Hohlraum (54) zur Führung der Luft wenigstens teilweise umgibt, wobei der durchgehende Hohlraum (54) mit einer Lufteintrittsöffnung (56) und einer Luftaustrittsöffnung (58) versehen ist, und wobei der Hohlraum zur Luftführung unmittelbar an die Wandung angrenzt;
wobei die Wandung (52) einen mehrlagigen Aufbau aufweist mit:
- einer Kernlage (60); und
- wenigstens einer ersten Decklage (62);
**dadurch gekennzeichnet, dass** die Kernlage (60) aus einem schallabsorbierenden offenporigen Kernmaterial besteht, so dass die Wandung eine Akustikwirkung aufweist;
wobei die erste Decklage (62) luftdicht ausgebildet ist und auf der außen liegenden Seite der Kernlage (60) angeordnet ist und flächig mit der Kernlage (60) verbunden ist; und
wobei die flächige Verbindung zwischen der Kernlage (60) und der ersten Decklage (62) eine Verbundwirkung derart bewirkt, dass die Wandung (52) selbsttragend ist und eine Strukturfunktion aufweist, um mechanisch auftretende Lasten an tragende Teile des Luftfahrzeugs übertragen zu können, so dass die Wandung auch eine Tragewirkung aufweist.

2. Klimaanlagenluftführung nach Anspruch 1, **dadurch gekennzeichnet, dass** die Kernlage (60) den Hohlraum (54) gegenüber der Umgebung thermisch isoliert.

3. Klimaanlagenluftführung nach Anspruch 1 oder 2, **dadurch gekennzeichnet, dass** die Kernlage (60) aus einem offenporigen Schaumwerkstoff besteht.

4. Klimaanlagenluftführung nach einem der vorhergehenden Ansprüche, **dadurch gekennzeichnet, dass** die erste Decklage (62) mit der Kernlage (60) integral ausgebildet ist.

5. Klimaanlagenluftführung nach Anspruch 4, **dadurch gekennzeichnet, dass** die erste Decklage (62) durch Verdichten der äußeren Schicht des Kernmaterials erzeugt ist.

6. Klimaanlagenluftführung nach einem der vorhergehenden Ansprüche, **dadurch gekennzeichnet, dass** eine zweite Decklage (72; 74) vorgesehen ist, die auf der innen liegenden Seite der Kernlage (60) angeordnet ist, wobei die zweite Decklage (72; 74) akustisch transparent ausgebildet ist.

7. Klimaanlagenluftführung nach Anspruch 6, **dadurch gekennzeichnet, dass** die zweite Decklage (74) als Dampfsperre ausgebildet ist.

8. Klimaanlagenluftführung nach einem der vorhergehenden Ansprüche, **dadurch gekennzeichnet, dass** die Luftaustrittsöffnung (58) als eine Luftaustrittsöffnung zur Einleitung der Luft in einen Kabineninnenraum ausgebildet ist.

9. Klimaanlagenluftführung nach Anspruch 8, **dadurch gekennzeichnet, dass** die Luftaustrittsöffnung (58) einen fächerförmigen Luftauslass (84) bildet und die schalldämpfende Wandung (52) an den Seitenflächen des Fächers angeordnet ist.

10. Flugzeug (10) mit einer Rumpfkonstruktion und einer innerhalb des Rumpfes ausgebildeten Kabine (16), sowie einer Klimaanlage, die eine Luftaufbereitungseinheit (32), und Luftführungen (34, 36) mit Luftaustrittsöffnungen aufweist; wobei die Luftführungen (34, 36) die Luft von der Luftaufbereitungseinheit (32) zu den Luftaustrittsöffnungen leiten, um die aufbereitete Luft in den Kabinenraum (16) einzubringen; und wobei die Luftführungen (36) wenigstens teilweise eine Klimaanlagenluftführung nach einem der Ansprüche 1 bis 9 aufweisen.

## Claims

1. An air conditioning conduit (50) with sound-damping effect for an aircraft, with a sound-damping wall (52) which at least partially encloses a continuous hollow space (54) for guiding the air, wherein the continuous hollow space (54) is provided with an air inlet opening (56) and an air outlet opening (58), and wherein the hollow space for conveyance of air directly adjoins the wall (52), wherein the wall (52) comprises a multilayered design with:
- a core layer (60) ; and
- at least a first cover layer (62);
**characterized in that**
the core layer (60) includes a sound-absorbing open-pore core material so that the wall comprises an acoustic effect;
wherein the first cover layer (62) is designed so as to be airtight and arranged on the external surface of the core layer (60), and is laminarly connected to the core layer (60); and
wherein the laminar connection between the core layer (60) and the first cover layer (62) causes a composite effect in such a manner that the wall (52) is self-supporting and has a structural function in order to be able to transfer mechanically-occurring loads to load-bearing parts of the aircraft so that the wall also provides a load-bearing effect.

2. The air conditioning conduit of claim 1, **characterized in that** the core layer (60) thermally insulates the hollow space (54) vis-à-vis the surroundings.

3. The air conditioning conduit according to claim 1 or 2, **characterized in that** the core layer (60) includes an open-pore foam material.

4. The air conditioning conduit according to one of the preceding claims, **characterized in that** the first cover layer (62) is integral formed with the cover layer (60).

5. The air conditioning conduit according to claim 4, **characterized in that** the first cover layer (62) is generated by compressing the external layer of the core material.

6. The air conditioning conduit according to one of the preceding claims, **characterized in that** a second cover layer (72; 74) is provided, which is arranged on the internal surface of the core layer (60), wherein the second cover layer (72; 74) is acoustically transparent.

7. The air conditioning conduit according to claim 6, **characterized in that** the second cover layer (72) is designed as a vapor barrier.

8. The air conditioning conduit according to one of the preceding claims, **characterized in that** the air outlet opening (58) is designed as an air outlet opening for introducing the air into a cabin interior space.

9. The air conditioning conduit according to claim 8, **characterized in that** the air outlet opening (58) forms a fan-shaped air outlet (84), and the sound-damping wall (52) is arranged on the lateral surfaces of the fan.

10. An airplane (10) with a fuselage structure and a cabin (16) formed within the fuselage; as well as an air conditioning system including an air conditioning unit (32) and air conduits (34, 36) with air outlet openings, wherein the air conduits (34, 36) convey the air from the air conditioning unit (32) to the air outlet openings in order to feed the conditioned air into the cabin space (16), and wherein the air conduits (36) at least partially comprise an air conditioning conduit according to any of the claims 1 to 9.

## Revendications

1. Conduite d'air d'installation de climatisation (50) dotée d'un effet amortissant le bruit pour un aéronef, comportant une paroi amortissant le bruit (52), qui entoure au moins en partie un espace vide continu (54) pour le guidage de l'air, l'espace vide continu (54) étant pourvu d'un orifice d'entrée d'air (56) et d'un orifice de sortie d'air (58), et l'espace vide pour le guidage de l'air étant directement adjacent à la paroi ;
la paroi (52) présentant une construction multicouche avec :
- une couche centrale (60) ; et
- au moins une première couche superficielle (62) ;
**caractérisée en ce que**
la couche centrale (60) se compose d'un matériau central à pores ouverts absorbant le son, de telle sorte que la paroi présente un effet acoustique ;
la première couche superficielle (62) étant réalisée de manière étanche à l'air et disposée sur le côté extérieur de la couche centrale (60) et reliée à la couche centrale (60) par la surface ; et
la liaison par la surface entre la couche centrale (60) et la première couche superficielle (62) provoquant une adhérence de telle manière que la paroi (52) est autoporteuse et présente une fonction structurale pour pouvoir transmettre des charges apparaissant sur le plan mécanique à des parties porteuses de l'aéronef de telle sorte que la paroi présente également un effet porteur.

2. Conduite d'air d'installation de climatisation selon la revendication 1, **caractérisée en ce que** la couche centrale (60) isole thermiquement l'espace vide (54) par rapport à l'environnement.

3. Conduite d'air d'installation de climatisation selon la revendication 1 ou 2, **caractérisée en ce que** la couche centrale (60) se compose de matériau en mousse à pores ouverts.

4. Conduite d'air d'installation de climatisation selon l'une des revendications précédentes, **caractérisée en ce que** la première couche superficielle (62) est réalisée d'un seul tenant avec la couche centrale (60).

5. Conduite d'air d'installation de climatisation selon la revendication 4, **caractérisée en ce que** la première couche superficielle (62) est générée par compression de la couche extérieure du matériau central.

6. Conduite d'air d'installation de climatisation selon l'une des revendications précédentes, **caractérisée en ce qu'**une seconde couche superficielle (72 ; 74), qui est disposée sur le côté intérieur de la couche centrale (60), est prévue, la seconde couche superficielle (72, 74) étant réalisée de manière transparente sur le plan acoustique.

7. Conduite d'air d'installation de climatisation selon la revendication 6, **caractérisée en ce que** la seconde couche superficielle (74) est réalisée sous la forme d'un pare-vapeur.

8. Conduite d'air d'installation de climatisation selon l'une des revendications précédentes, **caractérisée en ce que** l'orifice de sortie d'air (58) est réalisé sous la forme d'un orifice de sortie d'air destiné à faire passer l'air dans un espace intérieur de cabine.

9. Conduite d'air d'installation de climatisation selon la revendication 8, **caractérisée en ce que** l'orifice de sortie d'air (58) forme une sortie d'air (84) en forme d'éventail et la paroi amortissant le bruit (52) est disposée sur les surfaces latérales de l'éventail.

10. Aéronef (10) comportant une construction de fuselage et une cabine (16) réalisée à l'intérieur du fuselage, ainsi qu'une installation de climatisation, qui comporte une unité de préparation de l'air (32), et des conduites d'air (34, 36) dotées d'orifices de sortie d'air ; les conduites d'air (34, 36) guidant l'air de l'unité de préparation de l'air (32) aux orifices de sortie d'air pour amener l'air préparé dans l'intérieur de la cabine (16) ; et les conduites d'air (36) comportant au moins en partie une conduite d'air d'installation de climatisation selon l'une des revendications 1 à 9.
